# FASCICULE DE BREVET EUROPEEN

(11) **EP 4 311 967 B1**
(45) Date de publication et mention de la délivrance du brevet: **30.04.2025**
(21) Numéro de dépôt: 23183232.0
(22) Date de dépôt: 04.07.2023
(51) Int. Cl.: F16L 3/02, F16L 11/10, F16L 3/26, F16L 57/02

(54) **CANALISATION COMPRENANT AU MOINS UN CONDUIT SOUPLE RIGIDIFIÉ ET AÉRONEF COMPRENANT AU MOINS UNE TELLE CANALISATION**
ROHRLEITUNG MIT MINDESTENS EINEM VERSTEIFTEN FLEXIBLEN ROHR UND FLUGZEUG MIT MINDESTENS EINER SOLCHEN LEITUNG
DUCT COMPRISING AT LEAST ONE RIGIDISED FLEXIBLE DUCT AND AIRCRAFT COMPRISING AT LEAST ONE SUCH DUCT

(30) Priorité: 25.07.2022 FR 2207592
(43) Date de publication de la demande: 31.01.2024
(73) Titulaire: AIRBUS OPERATIONS (S.A.S.), 31060 Toulouse (FR)
(72) Inventeur: FOUCART-GAUDY, Simon, 31060 Toulouse (FR); DELPY, Vincent, 31060 Toulouse (FR); MILLET, Gérard, 31060 Toulouse (FR)
(74) Mandataire: Fantin, Laurent

(56) Documents cités:
- EP-A1- 2 781 814
- US-A1- 2009 194 186
- US-A1- 2020 271 241

## Description

La présente demande se rapporte à une canalisation comprenant au moins un conduit souple rigidifié ainsi qu'à un aéronef comprenant au moins une telle canalisation.

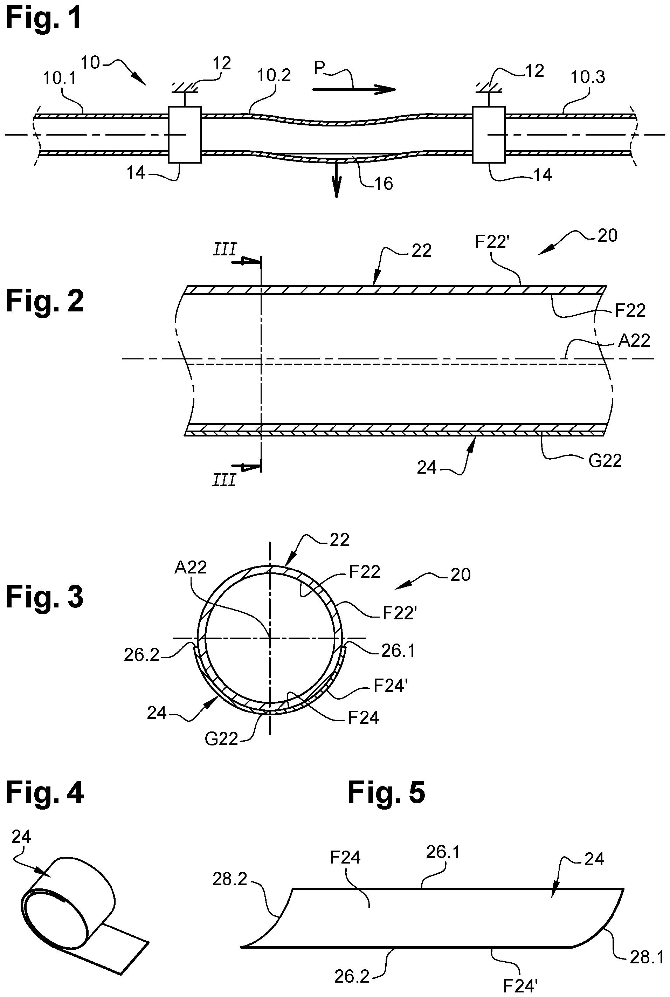

Selon un mode de réalisation visible sur la figure 1, une canalisation 10 comprend plusieurs conduits 10.1, 10.2, 10.3 positionnés bout à bout et reliés entre eux de manière étanche. La canalisation 10 est reliée à une structure 12 grâce à des colliers de fixation 14 positionnés le long de la canalisation 10, comme au niveau des zones de raccordement des conduits 10.1, 10.2, 10.3 par exemple. La canalisation 10 présente une légère pente P selon une direction allant du premier tronçon 10.1 vers le troisième tronçon 10.3 pour permettre à un liquide de s'écouler par gravité. Selon une configuration, les premier et troisième tronçons 10.1, 10.3 sont métalliques, rigides et conservent la pente P. Pour réduire la masse embarquée dans un aéronef, le deuxième tronçon 10.2 est en matière plastique et souple. En raison de la masse du liquide y circulant et de sa souplesse, le deuxième tronçon 10.2 peut s'affaisser et générer une cuvette 16 au niveau de laquelle peut stagner le liquide.

Par conséquent, pour certaines applications comme les canalisations d'eau potable par exemple, la majorité des tronçons sont métalliques et rigides pour limiter les risques d'apparition de cuvettes même si cela conduit à augmenter la masse embarquée.

US 2020/271241 A1 divulgue une canalisation comprenant un conduit souple et une bande de rigidification plaquée contre le conduit sur au moins une partie de sa longueur.

La présente invention vise à remédier à tout ou partie des inconvénients de l'art antérieur.

A cet effet, l'invention a pour objet une canalisation comprenant au moins un conduit souple présentant un axe, une face intérieure orientée vers l'axe, une face extérieure opposée à la face intérieure, des première et deuxième extrémités, une génératrice inférieure ainsi qu'une longueur correspondant à une distance séparant les première et deuxième extrémités. Selon l'invention, la canalisation comprend au moins une bande de rigidification plaquée contre le conduit sur au moins une partie de sa longueur, s'étendant selon une direction longitudinale sensiblement parallèle à l'axe du conduit et présentant, au moins dans un état, une raideur importante selon la direction longitudinale. En complément, la bande de rigidification est métallique et configurée pour se déformer de manière élastique entre un état enroulé lorsque les sections transversales de la bande de rigidification sont rectilignes et un état allongé et raide lorsque les sections transversales de la bande de rigidification sont courbes, la bande de rigidification présentant une première surface destinée à être plaquée contre le conduit courbe et concave dans l'état allongé et raide

Même si le conduit en matière plastique est souple, lorsque la bande de rigidification est plaquée contre le conduit, elle lui confère une raideur importante selon la direction longitudinale limitant les risques d'affaissement du conduit.

Selon d'autres caractéristiques prises isolément ou en combinaison :
- chaque bande de rigidification comprend des premier et deuxième bords latéraux sensiblement parallèles à la direction longitudinale positionnés de part et d'autre de la génératrice inférieure du conduit ;
- les premier et deuxième bords latéraux sont positionnés de manière sensiblement symétrique par rapport à la génératrice inférieure ;
- la canalisation comprend au moins une liaison reliant la bande de rigidification et le conduit ;
- la bande de rigidification est évidée pour réduire sa masse.

L'invention a également pour objet un aéronef comprenant au moins une canalisation selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe schématique d'un conduit illustrant un mode de réalisation de l'art antérieur,
- La figure 2 est une coupe schématique d'un conduit illustrant un mode de réalisation de l'invention,
- La figure 3 est une coupe transversale selon la ligne III-III de la figure 2 d'un conduit illustrant un mode de réalisation de l'invention,
- La figure 4 est une vue en perspective d'une bande de rigidification dans un premier état enroulé illustrant un mode de réalisation de l'invention,
- La figure 5 est une vue en perspective d'une bande de rigidification dans un deuxième état allongé et raide illustrant un mode de réalisation de l'invention,
- La figure 6 est une vue en perspective d'un conduit rigidifié illustrant un mode de réalisation de l'invention,
- La figure 7 est une coupe transversale d'un conduit rigidifié illustrant un mode de réalisation de l'invention,
- La figure 8 est une vue en perspective d'une bande de rigidification illustrant un mode de réalisation ne faisant pas partie de l'invention,
- La figure 9 est une coupe transversale de la bande de rigidification visible sur la figure 8,
- La figure 10 est une vue en perspective d'une bande de rigidification illustrant un autre mode de réalisation ne faisant pas partie de l'invention,
- La figure 11 est une coupe transversale de la bande de rigidification visible sur la figure 10,
- La figure 12 est une coupe transversale d'un conduit comportant la bande de rigidification visible sur la figure 10, et
- La figure 13 est une vue en perspective d'une bande de rigidification illustrant un autre mode de réalisation ne faisant pas partie de l'invention.

Selon une application, un aéronef comprend au moins une canalisation 20 configurée pour drainer un liquide, comme de l'eau par exemple. Bien entendu, l'invention n'est pas limitée à cette application.

La canalisation 20 comprend au moins un conduit 22 souple, en matière plastique par exemple. Ce conduit 22 présente une masse nettement inférieure à celle d'un conduit métallique.

Selon une configuration, la canalisation 20 comprend plusieurs conduits, dont un conduit 22 souple, positionnés bout à bout et reliés entre eux de manière étanche par des systèmes de raccordement, en matière plastique par exemple. La canalisation 20 est reliée à une structure, comme la structure d'un aéronef, grâce à des colliers de fixation positionnés régulièrement le long de la canalisation 20.

Les systèmes de raccordement et les colliers de fixation ne sont pas plus décrits car ils peuvent être identiques à ceux de l'art antérieur.

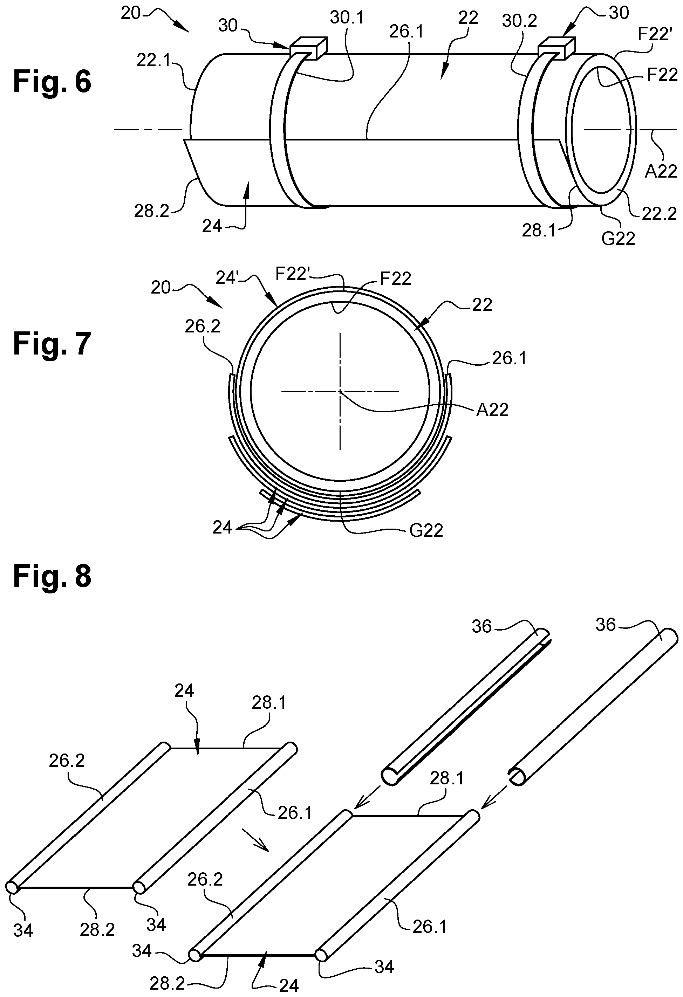

Comme illustré sur la figure 6, le conduit 22 est tubulaire et comprend un axe A22, une face intérieure F22 orientée vers l'axe A22 ainsi qu'une face extérieure F22' opposée à la face intérieure F22 et s'étend entre des première et deuxième extrémités 22.1, 22.2. Selon une configuration, les première et deuxième extrémités 22.1, 22.2 se présentent chacune sous la forme d'un chant annulaire positionné dans un plan transversal sensiblement perpendiculaire à l'axe A22. Le conduit 22 présente une longueur qui correspond à une distance séparant les première et deuxième extrémités 22.1, 22.2 en suivant une génératrice.

En fonctionnement, le conduit 22 comprend une génératrice inférieure G22 qui correspond à la génératrice du conduit 22 la plus basse selon la direction verticale.

La canalisation 20 comprend au moins une bande de rigidification 24 accolée contre le conduit 22, plus précisément contre la face extérieure F22' du conduit 22, qui s'étend sur au moins une partie de la longueur du conduit 22. Selon une configuration visible sur la figure 6, la bande de rigidification 24 s'étend sur toute la longueur du conduit 22. Selon une autre configuration, la bande de rigidification 24 s'étend seulement sur une partie de la longueur du conduit 22. Selon une autre configuration, la canalisation 20 comprend plusieurs bandes de rigidification 24 accolées contre le même conduit 22 et décalées les unes par rapport aux autres selon la longueur du conduit 22.

Selon une autre configuration visible sur la figure 7, la canalisation 20 comprend plusieurs bandes de rigidification 24 superposées les unes sur les autres.

Quel que soit le mode de réalisation, la canalisation 20 comprend au moins une bande de rigidification 24 plaquée contre le conduit 22, sur au moins une partie de la longueur du conduit 22, s'étendant selon une direction longitudinale sensiblement parallèle à l'axe A22 du conduit 22 et présentant, au moins dans un état, une raideur importante selon la direction longitudinale. Ainsi, lorsqu'elle est plaquée contre le conduit 22, la bande de rigidification 24 confère au conduit 22 une raideur importante selon la direction longitudinale limitant les risques d'affaissement du conduit 22 qui reste rectiligne.

Selon une configuration, la bande de rigidification 24 présente, dans des plans perpendiculaires à la direction longitudinale, une courbure sensiblement égale à la courbure de la face extérieure F22' du conduit 22. En raison de cette courbure, la bande de rigidification 24 présente un moment d'inertie important selon la direction longitudinale, lui conférant une raideur importante selon la direction longitudinale et limitant ainsi les risques de flexion.

Selon un mode de réalisation, chaque bande de rigidification 24 présente un pourtour sensiblement rectangulaire, comprenant des premier et deuxième bords latéraux 26.1, 26.2 sensiblement parallèles entre eux et agencés parallèlement à l'axe A22 du conduit 22 (ou à la direction longitudinale) ainsi que des premier et deuxième bords transversaux 28.1, 28.2 sensiblement perpendiculaires aux premier et deuxième bords latéraux 26.1, 26.2. La bande de rigidification 24 présente une première surface F24 destinée à être plaquée contre le conduit 22 et une deuxième surface F24' opposée à la première surface F24.

Selon une configuration, la bande de rigidification 24 présente une largeur (distance séparant les premier et deuxième bords latéraux 26.1, 26.2) sensiblement égale ou légèrement inférieure à une moitié de la circonférence du conduit 22. Selon un agencement, chaque bande de rigidification 24 est positionnée contre le conduit 22 afin que les premier et deuxième bords latéraux 26.1, 26.2 soient positionnés de part et d'autre de la génératrice inférieure G22, de préférence de manière à ce qu'ils soient sensiblement symétriques par rapport à la génératrice inférieure G22.

Pour donner un ordre de grandeur, la bande de rigidification 24 présente une épaisseur (distance séparant les première et deuxième surfaces F24, F24') de l'ordre du millimètre, comprise entre 0,5 et 1,5 mm, une largeur (distance séparant les premier et deuxième bords latéraux 26.1, 26.2) de l'ordre de 1 à 5 cm et une longueur (distance séparant les premier et deuxième bords transversaux 28.1, 28.2) supérieure à 10 cm.

La canalisation 20 comprend au moins une liaison 30 reliant la bande de rigidification 24 et le conduit 22. Selon une configuration, la liaison 30 est une colle ou un film de colle intercalé(e) entre la bande de rigidification 24 et la face extérieure F22' du conduit 22. Selon une autre configuration, la liaison 30 comprend des colliers de serrage 30.1, 30.2, répartis entre les première et deuxième extrémités 22.1, 22.2, enserrant la bande de rigidification 24 et le conduit 22.

Selon l'invention, la bande de rigidification 24 est métallique et configurée pour se déformer de manière élastique entre un état enroulé lorsque les sections transversales de la bande de rigidification 24 sont rectilignes, comme illustré sur la figure 4, et un état allongé et raide lorsque les sections transversales de la bande de rigidification 24 sont courbes, la première surface F24 destinée à être plaquée contre le conduit 22 étant courbe et concave, comme illustré sur la figure 5. Cette configuration permet de réduire l'encombrement de la bande de rigidification 24 lorsqu'elle n'est pas utilisée. Ainsi, lorsqu'ils ne sont pas utilisés, le conduit 22 souple et la bande de rigidification 24 peuvent être stockés enroulés.

Selon un mode de réalisation ne faisant pas partie de l'invention, la bande de rigidification 24 comprend au moins un renfort longitudinal 32, sensiblement parallèle à la direction longitudinale (ou au premier ou deuxième bord latéral 26.1, 26.2), qui s'étend quasiment sur toute la longueur de la bande de rigidification et présente une raideur importante selon la direction longitudinale. Selon un agencement, la bande de rigidification 24 comprend des premier et deuxième renforts longitudinaux 32, 32' positionnés respectivement au niveau des premier et deuxième bords latéraux 26.1, 26.2.

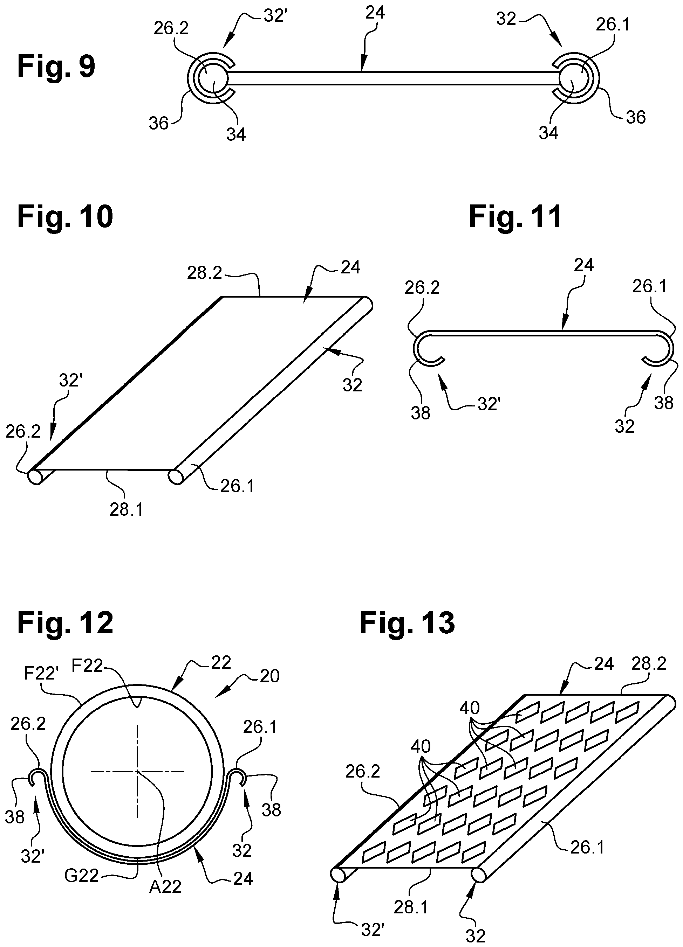

Selon un mode de réalisation visible sur les figures 8 et 9 ne faisant pas partie de l'invention, la bande de rigidification 24 est en matière plastique souple ou semi-rigide et comprend des premier et deuxième renforts longitudinaux 32, 32' positionnés respectivement au niveau des premier et deuxième bords latéraux 26.1, 26.2. Chacun des premier et deuxième renforts longitudinaux 32, 32' comprend un bourrelet 34 solidaire de la bande de rigidification 24, réalisé d'un seul tenant avec cette dernière, ainsi qu'un tube 36 rigide, fendu sur sa longueur, enfilé sur le bourrelet 34. Le bourrelet 34 présente une section ronde. En complément, le tube 36 présente un diamètre intérieur sensiblement égal ou très légèrement supérieur au diamètre du bourrelet 34.

Selon un autre mode de réalisation visible sur les figures 10 à 12, la bande de rigidification 24 est métallique ou en matière plastique semi-rigide et comprend des premier et deuxième renforts longitudinaux 32, 32' positionnés respectivement au niveau des premier et deuxième bords latéraux 26.1, 26.2. Chacun des premier et deuxième bords latéraux 26.1, 26.2 présente un profil 38 recourbé ou plié formant un renfort longitudinal 32, 32'. Selon un mode de réalisation, le profil 38 présente une section en C ou en U Selon une configuration ne faisant pas partie de l'invention, pour réduire sa masse, la bande de rigidification 24 est évidée, comme illustré sur la figure 13. A titre d'exemple, la bande de rigidification 24 comprend des découpes 40 réparties de manière homogène sur toute la surface de la bande de rigidification 24.

Selon un autre mode de réalisation, la canalisation 20 comprend au moins une bande de rigidification 24' qui s'étend sur toute la circonférence du conduit 22, comme illustré sur la figure 7.

Ces différents modes de réalisation permettent de réduire la masse de la canalisation et les coûts de production.

## Revendications

1. Canalisation comprenant au moins un conduit souple (22) présentant un axe (A22), une face intérieure (F22) orientée vers l'axe (A22), une face extérieure (F22') opposée à la face intérieure (F22), des première et deuxième extrémités (22.1, 22.2), une génératrice inférieure (G22) ainsi qu'une longueur correspondant à une distance séparant les première et deuxième extrémités (22.1, 22.2), où la canalisation comprend au moins une bande de rigidification (24) plaquée contre le conduit (22) sur au moins une partie de sa longueur, s'étendant selon une direction longitudinale sensiblement parallèle à l'axe (A22) du conduit (22) et présentant, au moins dans un état, une raideur importante selon la direction longitudinale et où la bande de rigidification (24) est métallique, la canalisation étant **caractérisée en ce que** la bande de rigidification (24) est configurée pour se déformer de manière élastique entre un état enroulé lorsque les sections transversales de la bande de rigidification (24) sont rectilignes et un état allongé et raide lorsque les sections transversales de la bande de rigidification (24) sont courbes, la bande de rigidification (24) présentant une première surface (F24) destinée à être plaquée contre le conduit (22) courbe et concave dans l'état allongé et raide.

2. Canalisation selon la revendication 1, **caractérisée en ce que** chaque bande de rigidification (24) comprend des premier et deuxième bords latéraux (26.1, 26.2) sensiblement parallèles à la direction longitudinale positionnés de part et d'autre de la génératrice inférieure (G22) du conduit (22).

3. Canalisation selon la revendication précédente, **caractérisée en ce que** les premier et deuxième bords latéraux (26.1, 26.2) sont positionnés de manière sensiblement symétrique par rapport à la génératrice inférieure (G22).

4. Canalisation selon l'une des revendications précédentes, **caractérisée en ce que** la canalisation (20) comprend au moins une liaison (30) reliant la bande de rigidification (24) et le conduit (22).

5. Canalisation selon l'une des revendications précédentes, **caractérisée en ce que** la bande de rigidification (24) est évidée pour réduire sa masse.

6. Aéronef comprenant au moins une canalisation selon l'une des revendications précédentes.

## Patentansprüche

1. Rohrleitung mit wenigstens einer flexiblen Leitung (22), die eine Achse (A22), eine der Achse (A22) zugewandte Innenseite (F22), eine der Innenseite (F22) gegenüberliegende Außenseite (F22'), ein erstes und ein zweites Ende (22.1, 22.2), eine untere Form (G22) sowie eine Länge aufweist, die einem Abstand zwischen dem ersten und dem zweiten Ende (22.1, 22.2) entspricht, wobei die Rohrleitung wenigstens ein Versteifungsband (24) umfasst, das über wenigstens einen Teil seiner Länge gegen die Leitung (22) angesetzt ist, das sich in einer Längsrichtung im Wesentlichen parallel zur Achse (A22) der Leitung (22) erstreckt und zumindest in einem Zustand eine erhebliche Steifigkeit in der Längsrichtung aufweist, und wobei das Versteifungsband (24) aus Metall besteht, wobei die Rohrleitung **dadurch gekennzeichnet ist, dass** das Versteifungsband (24) so eingerichtet ist, dass es sich elastisch zwischen einem aufgerollten Zustand, in dem die Querschnitte des Versteifungsbandes (24) geradlinig sind, und einem langgestreckten und steifen Zustand, in dem die Querschnitte des Versteifungsbandes (24) gekrümmt sind, verformt, wobei das Versteifungsband (24) eine erste Oberfläche (F24) aufweist, die dazu vorgesehen ist, in dem langgestreckten und steifen Zustand gegen die Leitung (22) gekrümmt und konkav angesetzt zu sein.

2. Rohrleitung nach Anspruch 1, **dadurch gekennzeichnet, dass** jedes Versteifungsband (24) einen ersten und einen zweiten Seitenrand (26.1, 26.2) umfasst, die im Wesentlichen parallel zur Längsrichtung verlaufen und beiderseits der unteren Form (G22) der Leitung (22) angeordnet sind.

3. Rohrleitung nach dem vorhergehenden Anspruch, **dadurch gekennzeichnet, dass** der erste und zweite Seitenrand (26.1, 26.2) im Wesentlichen symmetrisch zur unteren Form (G22) angeordnet sind.

4. Rohrleitung nach einem der vorhergehenden Ansprüche, **dadurch gekennzeichnet, dass** die Rohrleitung (20) wenigstens eine Verbindung (30) aufweist, die das Versteifungsband (24) und die Leitung (22) verbindet.

5. Rohrleitung nach einem der vorhergehenden Ansprüche, **dadurch gekennzeichnet, dass** das Versteifungsband (24) zur Verringerung seiner Masse ausgehöhlt ist.

6. Luftfahrzeug mit wenigstens einer Rohrleitung nach einem der vorhergehenden Ansprüche.

## Claims

1. Pipe comprising at least one flexible duct (22) having an axis (A22), an inner face (F22) directed toward the axis (A22), an outer face (F22') opposite to the inner face (F22), first and second ends (22.1, 22.2), a lower generatrix (G22), and a length corresponding to a distance separating the first and second ends (22.1, 22.2), wherein the pipe comprises at least one stiffening band (24), which is pressed against the duct (22) over at least some of its length, extends along a longitudinal direction substantially parallel to the axis (A22) of the duct (22) and has, at least in one state, considerable rigidity along the longitudinal direction, and wherein the stiffening band (24) is metallic, the pipe being **characterized in that** the stiffening band (24) is configured to deform elastically between a rolled-up state, when the cross sections of the stiffening band (24) are rectilinear, and an elongate and rigid state, when the cross sections of the stiffening band (24) are curved, the stiffening band (24) having a first surface (F24) which is intended to be pressed against the duct (22) and is curved and concave in the elongated and rigid state.

2. Pipe as claimed in claim 1, wherein each stiffening band (24) comprises first and second lateral edges (26.1, 26.2) that are substantially parallel to the longitudinal direction and positioned on either side of the lower generatrix (G22) of the duct (22).

3. Pipe as claimed in the preceding claim, wherein the first and second lateral edges (26.1, 26.2) are positioned substantially symmetrically in relation to the lower generatrix (G22).

4. Pipe as claimed in one of the preceding claims, wherein the pipe (20) comprises at least one connection (30) connecting the stiffening band (24) and the duct (22).

5. Pipe as claimed in one of the preceding claims, wherein cutouts are made in the stiffening band (24) to reduce its mass.

6. Aircraft comprising at least one pipe as claimed in one of the preceding claims.
